# EUROPÄISCHE PATENTSCHRIFT

(11) **EP 3 144 180 B1**
(45) Veröffentlichungstag und Bekanntmachung des Hinweises auf die Patenterteilung: **20.09.2017**
(21) Anmeldenummer: 16401046.4
(22) Anmeldetag: 03.08.2016
(51) Int. Cl.: B60N 2/56, B60H 1/00, B60H 1/24

(54) **BELÜFTUNGSEINRICHTUNG UND SITZ MIT EINER SOLCHEN BELÜFTUNGSEINRICHTUNG, INSBESONDERE FÜR EIN FAHRZEUG**
VENTILATION DEVICE AND SEAT WITH SUCH A VENTILATION DEVICE, IN PARTICULAR FOR A VEHICLE
DISPOSITIF D'AERATION ET SIEGE COMPRENANT UN TEL DISPOSITIF D'AERATION, EN PARTICULIER POUR UN VEHICULE AUTOMOBILE

(30) Priorität: 08.09.2015 DE 102015115025; 22.03.2016 DE 102016105372
(43) Veröffentlichungstag der Anmeldung: 22.03.2017
(73) Patentinhaber: Denso Automotive Deutschland GmbH, 85386 Eching (DE)
(72) Erfinder: Priesemuth, Roland, 85386 Eching (DE); Lange, Katrin, 85386 Eching (DE); Wegener, Ingo, 85386 Eching (DE); Nishikawa, Michio, 85386 Eching (DE); Sago, Yasuhiro, 85386 Eching (DE)
(74) Vertreter: Stalder, Wolfgang

(56) Entgegenhaltungen:
- DE-A1-102006 016 091
- DE-A1-102009 043 112
- DE-A1-102013 206 784

## Beschreibung

Die vorliegende Erfindung betrifft eine Belüftungseinrichtung, insbesondere zur Verwendung in Kraftfahrzeugen. Die Erfindung betrifft ferner einen Sitz, insbesondere einen Fahrzeugsitz, mit einer solchen Belüftungseinrichtung.

Mit dem steigenden Bedarf an Fahrzeugklimatisierung sind in den letzten Jahren zahlreiche modulare und zonal einstellbare Klimatisierungseinrichtungen für Kraftfahrzeuge entwickelt worden. Hierdurch können durch eine Basiskonfiguration und geeignete Erweiterungseinheiten unterschiedliche Klimatisierungen für verschiedene Fahrzeugtypen bzw. Ausstattungsvarianten gleicher Fahrzeugtypen ohne größeren Entwicklungsaufwand bereitgestellt werden. Beispielsweise ist eine im Bereich des Mitteltunnels zwischen den Vordersitzen anzuordnende Klimatisierungseinheit für den Fondbereich eines Personenkraftfahrzeugs aus der EP 2 000 337 A2 bekannt.

Aus der DE102006016091A1 (die dem Oberbegriff des Anspruchs 1 entspricht), der DE102009043112A1 und der DE102015100309A1 sind Belüftungs- und/oder Klimatisierungseinrichtungen des Fondbereichs angegeben, welche teilweise in die Vordersitze integriert sind und einen heckwärtigen Luftstrom in den Fondbereich bereitstellen können.

Die obengenannten Lösungen zur Belüftung und/oder Klimatisierung des Fondbereichs haben mehrere Nachteile. Sie benötigen einerseits entweder viel Bauraum bzw. greifen in den Bauraum anderer Komponenten, wie z.B. den typischerweise separat entwickelten Fahrzeugsitzen, so massiv ein, dass dies eine verstärkte Zusammenarbeit bei der Entwicklung solcher Systeme erforderlich macht. Ferner ist die so angegebene Klimatisierung zumeist recht energieaufwändig.

Es ist die Aufgabe der vorliegenden Erfindung, eine einfache und energiesparende Belüftungseinrichtung für die Rückseite hinter einem Sitz, insbesondere einem Fahrzeugsitz, anzugeben. Diese Aufgabe wird durch eine Belüftungseinrichtung nach Anspruch 1 sowie durch einen Sitz nach Anspruch 13 gelöst. Vorteilhafte Aus- und Weiterbildungen ergeben sich aus den abhängigen Ansprüchen.

Die erfindungsgemäße Belüftungseinrichtung umfasst ein luftführendes Gehäuse mit wenigstens einer Lufteinlassöffnung, eine mit der Lufteinlassöffnung verbundene Luftauslassvorrichtung und ein Gebläse, welches anordenbar ist, um Luft von der Lufteinlassöffnung zu der Luftauslassvorrichtung zu transportieren. Die erfindungsgemäße Belüftungseinrichtung ist dadurch gekennzeichnet, dass diese zur Befestigung an oder zur Integration in einem Sitz, insbesondere einem Fahrzeugsitz, geeignet ist, wobei die Luftauslassvorrichtung zur Befestigung an oder zur Integration in der Rückenlehne des Sitzes geeignet ist. Dabei weist die Luftauslassvorrichtung eine langgestreckte schlitzartige Luftaustrittsöffnung auf, welche zur Anordnung im Bereich des Begrenzungsrandes der Rückenlehne, insbesondere zur Ausrichtung zum Begrenzungsrand und/oder oberhalb vom oberen Begrenzungsrand der Rückenlehne, zum rückwärtigen (also im Fahrzeug zum heckwärtigen) Ausblasen von Luft geeignet ist. Eine so angegebene Belüftungseinrichtung kann nicht nur leicht in einen Fahrzeugsitz integriert werden, sondern auch nachträglich an einen solchen oder einen beliebigen Sitz angepasst und angeordnet werden. Dabei wird durch die schlitzartige Luftaustrittsöffnung ein Primärluftzug mit einem vergleichsweise geringen Strömungsquerschnitt erzeugt. Die Lage der schlitzartigen Luftaustrittsöffnung im Bereich des Begrenzungsrandes der Rückenlehne ermöglicht dann, dass von dem dünnschichtigen Primärluftzug ein Sekundärluftzug erzeugt wird, bei welchem das an den Begrenzungsrand der Rückenlehne angrenzende Luftvolumen um den Fahrzeugsitz herum mitbeschleunigt wird. Dieser Sekundärluftzug weist einen wesentlich größeren Strömungsquerschnitt auf, strömt dafür aber mit deutlich geringerer Geschwindigkeit. Dadurch wird ein seichter, breiterer Luftstrom erzeugt, welcher teilweise die ggf. bereits im Vorderbereich des Sitzes/ Fahrzeugsitzes vorklimatisierte Luft mitnimmt. Diese sowie die ggf. vorklimatisierte Luft des Primärluftzugs stellen dann die Klimatisierung für den rückwärtigen Bereich des Sitzes, im Fahrzeug also dem Fondbereich, bereit. Tests haben dabei belegt, dass der Energieverbrauch gegenüber einem direkt erzeugten, vergleichbaren Luftstrom um mehr als die Hälfte reduziert werden kann.

Die Lufteinlassöffnungen können insbesondere in Einbaurichtung seitlich und/oder nach unten ausgerichtet sein. Bei einer solchen Ausrichtung kann eine kompakte Gestaltung der Belüftungseinrichtung mit einer vergleichsweise geringen Beeinflussung des heckwärtigen Luftaustritts erzielt werden. Falls die Luftzufuhr über einen vergleichsweise langen Luftzufuhrkanal erfolgt, können die Lufteinlassöffnungen an sich beliebig angepasst sein, um ggf. vorklimatisierte Luft anzusaugen. In diesem Fall können die Lufteinlassöffnungen z.B. auch nach vorne gerichtet sein.

Die Luftauslassvorrichtung ist vorteilhafterweise langgestreckt ausgebildet. Die langgestreckte schlitzartige Luftaustrittsöffnung verläuft dann entlang der so gebildeten Längsrichtung der Luftauslassvorrichtung. Dies ermöglicht eine möglichst schmale, flache Ausgestaltung der Belüftungseinrichtung.

Für den Fall, dass die erfindungsgemäße Belüftungseinrichtung zum nachträglichen Einbau bestimmt ist, umfasst sie geeignete Befestigungsmittel zum Befestigen und Anpassen an den vorgesehenen Sitz bzw. Fahrzeugsitz. Die Befestigungsmittel können dabei insbesondere durch Steck-, Rast- oder Schraubverbindungen bereitgestellt werden, wie diese dem Fachmann allgemein bekannt sind. Falls ein Fahrzeugsitz für das Nachrüsten mit einer solchen Belüftungseinrichtung vorgesehen ist, in der Grundversion aber ohne eine solche Belüftungseinrichtung ausgeliefert wurde, können insbesondere entsprechend angepasste Befestigungsmittel am Fahrzeugsitz vorgesehen sein, welche dann mit den Befestigungsmitteln an der erfindungsgemäßen Belüftungseinrichtung in Eingriff bringbar sind.

Insbesondere eignet sich die erfindungsgemäße Belüftungseinrichtung für die Anordnung am Fahrersitz oder Beifahrersitz in einem Personenkraftwagen. Darüber hinaus ist aber auch eine Anordnung an anderen Sitzen denkbar, beispielsweise bei Kraftfahrzeugen mit mehreren Sitzreihen, z.B. Kleinbussen oder Bussen, oder aber auch bei beliebigen Sitzen ohne konkreten Fahrzeugbezug.

Gemäß einer vorteilhaften Ausbildung der erfindungsgemäßen Belüftungseinrichtung ist die Querschnittsfläche der Lufteinlassöffnung größer als die Querschnittsfläche der schlitzartigen Luftaustrittsöffnung. Die Querschnittsfläche der Lufteinlassöffnung ist beispielsweise um einen Faktor > 1,5, > 2 oder sogar > 5 größer. Dadurch ergibt sich eine Verdichtung des Luftstroms, wodurch die angesaugte Luft in Richtung Primärluftzug beschleunigt wird. Damit kann bei bereits geringer Gebläsedrehzahl (und damit verbunden einem vergleichsweise leisen Betrieb des Gebläses) ein vergleichsweise großer Sekundärluftzug erreicht werden. Alternativ ist die Querschnittsfläche der Lufteinlassöffnung etwa gleich groß wie oder nur geringfügig größer (z.B. 10%) als die Querschnittsfläche der schlitzartigen Luftaustrittsfläche.

Gemäß einer Ausbildung der Erfindung umfasst das luftführende Gehäuse einen Lufteingangskanal mit der wenigstens einen Lufteinlassöffnung, wobei das Gebläse in dem Lufteingangskanal anordenbar ist, um Luft von der Lufteinlassöffnung zu der Luftauslassvorrichtung zu transportieren. Ein solcher Lufteingangskanal kann vorteilhafterweise bogenförmig gekrümmt sein, wobei die Luftströmungsrichtung an der Lufteinlassöffnung im Wesentlichen senkrecht zu der Luftströmungsrichtung am Übergang vom Lufteingangskanal in die Luftauslassvorrichtung verläuft. Ferner ist dabei vorgesehen, dass die Luftauslassvorrichtung derart gestaltet ist, dass die Luftströmungsrichtung in der Luftauslassvorrichtung bis zum Austritt aus der Luftaustrittsöffnung wenigstens einmal senkrecht umgelenkt wird. Dabei kann die Luftströmungsrichtung innerhalb der Belüftungseinrichtung flexibel um den Fahrzeugsitz herumgeführt werden. Ein Ansaugen der Luft in die Lufteinlassöffnung von vorne und ein Ausströmen des Primärluftzugs nach hinten sind möglich.

Gemäß vorteilhafter Ausgestaltungen ist die Luftauslassvorrichtung entweder langgestreckt ausgebildet, wobei die langgestreckte schlitzartige Luftaustrittsöffnung entlang der so gebildeten Längsrichtung der Luftauslassvorrichtung verläuft, und dabei die Luftzufuhr über den Lufteinlasskanal über die seitliche Schmalseite erfolgt. Alternativ dazu ist die Luftauslassvorrichtung plattenförmig, wobei die langgestreckte schlitzartige Luftaustrittsöffnung an wenigstens einem Randbereich der Luftauslassvorrichtung verläuft, und dabei die Luftzufuhr über den unteren oder einen seitlichen Rand erfolgt. Diese Ausgestaltungsvarianten ermöglichen eine einfache Anordnung der schlitzartigen Luftaustrittsöffnung am oberen oder seitlichen Rand der Rückenlehne. Die Luftauslassvorrichtung kann dabei entweder wulstförmig im oberen Bereich der Rückenlehne in der Nähe der Kopfstütze angebracht werden oder alternativ flach an der Rückseite der Rückenlehne eingepasst werden. Hierdurch wird vergleichsweise wenig Bauraum beansprucht und das ursprüngliche Design des Fahrzeugsitzes relativ wenig verändert.

In der Luftauslassvorrichtung kann vorteilhafterweise eine Luftführungsstruktur ausgebildet sein, mittels welcher eine homogenere Aufteilung des Luftstroms von einem breiteren Querschnitt auf eine langgestreckte schlitzartige Luftaustrittsöffnung erreicht werden soll.

Gemäß einer weiteren Ausbildung der Erfindung saugt das Gebläse die Luft in Einbaurichtung von hinten oder von vorne an. Dabei ist das Gebläse in Einbaurichtung unterhalb - insbesondere direkt unterhalb - von der Luftauslassvorrichtung angeordnet, sodass die angesaugte Luft direkt von unten der Luftauslassvorrichtung zugeführt wird. Dies ermöglicht kurze Luftwege durch die erfindungsgemäße Belüftungseinrichtung. Die Belüftungseinrichtung kann somit sehr kompakt ausgebildet werden. Außerdem wird die Wärmeaufnahme der Luft beim Durchströmen der Belüftungseinrichtung gering gehalten. Als Gebläse eignen sich in dieser Ausführungsform insbesondere Radialgebläse oder Tangentialgebläse.

Besonders bevorzugt ist in dieser Ausgestaltung die Verwendung eines Radialgebläses, welcher in Ansaugrichtung von einem Hohlraum umgeben ist, welcher wiederum in Einbaurichtung nach oben geschlossen und nach unten und/oder seitlich wenigstens teilweise geöffnet ist. Dies ermöglicht eine sehr kurze Luftzufuhr und kann mit geringem Materialaufwand (d.h. kostengünstig und leicht) hergestellt werden.

Typischerweise beträgt die Schlitzdicke der schlitzartigen Luftaustrittsöffnung zwischen 0,5 mm bis 5 mm, vorzugsweise zwischen 1 mm und 2 mm. Zu größeren Schlitzdicken hin verringert sich der vorteilhafte Mitnahmeeffekt eines Sekundärluftstroms. Bei zu geringen Schlitzdicken besteht die Gefahr, dass durch Fertigungstoleranzen, geringfügige Verbiegung während des Gebrauchs oder etwa durch Verschmutzung kein gleichmäßiger Primärluftstrom bereitgestellt wird. Die schlitzartige Luftaustrittsöffnung ist derart in der Luftauslassvorrichtung vorgesehen, dass ein Überströmen der Luftauslassvorrichtung stromabwärts der Luftaustrittsöffnung ermöglicht wird. Dazu kann insbesondere vorgesehen sein, dass der schlitzförmige Querschnitt der Luftaustrittsöffnung sich mittels in die Luftauslassvorrichtung hineinverlaufenden Wandungen stromaufwärts als schlitzartiger Kanal erstreckt, und stromabwärts der Luftaustrittsöffnung eine Luftleitfläche an der Luftauslassvorrichtung ausgebildet ist. Durch das Anlegen der Primärströmung an die Luftauslassvorrichtung bzw. daran ausgebildeten Luftleitflächen wird das Ausbilden eines Sekundärstroms verbessert. Durch den schlitzartigen Kanal wird zudem eine definierte Luftaustrittsrichtung aus der Luftaustrittsöffnung ermöglicht, wodurch der Sekundärluftstrom besser einstellbar ist.

Die Luftleitfläche ist gemäß einer Ausführungsform in Einbaurichtung von dem schlitzartigen Kanal zwischen 10° und 45°, bevorzugt zwischen 15° und 35°, nach unten abgewinkelt. Hierdurch wird der Primärluftstrom zunächst nicht auf den Kopfbereich im Fond gerichtet, sodass in den Kopfbereich vorzugsweise nur der als angenehmer empfundene, seichte Sekundärluftstrom gerichtet ist.

Gemäß einer Weiterbildung der erfindungsgemäßen Belüftungseinrichtung ist an der Luftauslassvorrichtung eine Luftklappenanordnung vorgesehen, welche an einer zur langgestreckten schlitzartigen Luftaustrittsöffnung parallelen Schwenkachse stromabwärts der Luftaustrittsöffnung schwenkbar gelagert ist. Die Luftklappenanordnung kann dabei eine oder mehrere Luftklappen umfassen, welche auf einer oder mehreren in einer Flucht liegender Schwenkachsen gelagert sein können. Die Luftklappen können dabei ganz oder teilweise in den Strahl des Primärluftzugs verstellbar sein. Hierdurch kann weiterhin die Richtung des Primärluftzugs z.B. an die Größe der dahinter positionierten Person oder den konkreten Luftzugwunsch angepasst werden.

Die Luftklappen und das Gebläse sind verstellbar und/oder regelbar. Vorteilhaft im Sinne der Erfindung ist eine möglichst einfache Ausgestaltung der Belüftungseinrichtung. Daher ist insbesondere vorgesehen, das Gebläse über ein einfaches Bedienelement, z.B. einen Drehschalter, elektrisch zu steuern, während die Luftklappen in einfacher Weise vorzugsweise direkt von Hand verstellbar sind.

Erfindungsgemäß ist ein Sitz, insbesondere ein Fahrzeugsitz, mit einer zuvor genannten Belüftungseinrichtung ausgestattet. Der so ausgestattete Sitz weist die zuvor genannten Vorteile der Belüftungseinrichtung auf.

Vorteilhafterweise wird die langgestreckte schlitzartige Luftaustrittsöffnung horizontal an der Oberkannte der Rückenlehne des Sitzes/ Fahrzeugsitzes angeordnet. Hierdurch kann ggf. vorklimatisierte Luft als Sekundarluftzug über die Rückenlehne bzw. zwischen der Oberkante der Rückenlehne und der Kopfstütze des Sitzes/ Fahrzeugsitzes hindurchströmen.

Weiterhin ist als vorteilhafte Ausbildung der Erfindung zu sehen, wenn die Lufteinlassöffnung im seitlichen Bereich des Fahrzeugsitzes, insbesondere im Bereich einer Armlehne, angeordnet ist, wobei der Öffnungsquerschnitt in Bezug zur Einbaurichtung im Kraftfahrzeug im Wesentlichen seitlich oder nach vorne ausgerichtet ist. Einerseits kann eine solche Anordnung mit vergleichsweise geringen Auswirkungen auf den Komfort des Fahrzeugsitzes realisiert werden, ohne z.B. die Bewegungsfreiheit im Fahrzeugsitz nennenswert einzuschränken. Ferner kann eine solche Anordnung auch ohne größere ästhetische Auswirkung realisiert werden.

Die Erfindung wird nun anhand von Ausführungsbeispielen und mit Bezug zu den Figuren näher erläutert.
- Die Figur 1: zeigt schematisch zwei hintereinander angeordnete Fahrzeugsitze, wobei der vordere Fahrzeugsitz mit einer erfindungsgemäßen Belüftungseinrichtung ausgestattet ist,
- die Figuren 2 bis 4: zeigen eine Belüftungseinrichtung gemäß einem ersten Ausführungsbeispiel der Erfindung, welche insbesondere für den nachträglichen Anbau an einen Sitz geeignet ist,
- die Figuren 5 bis 10: zeigen Ausführungsvarianten einer Belüftungseinrichtung gemäß einem zweiten Ausführungsbeispiel der Erfindung,
- die Figuren 11 bis 14: zeigen eine Belüftungseinrichtung gemäß einem dritten Ausführungsbeispiel der Erfindung.

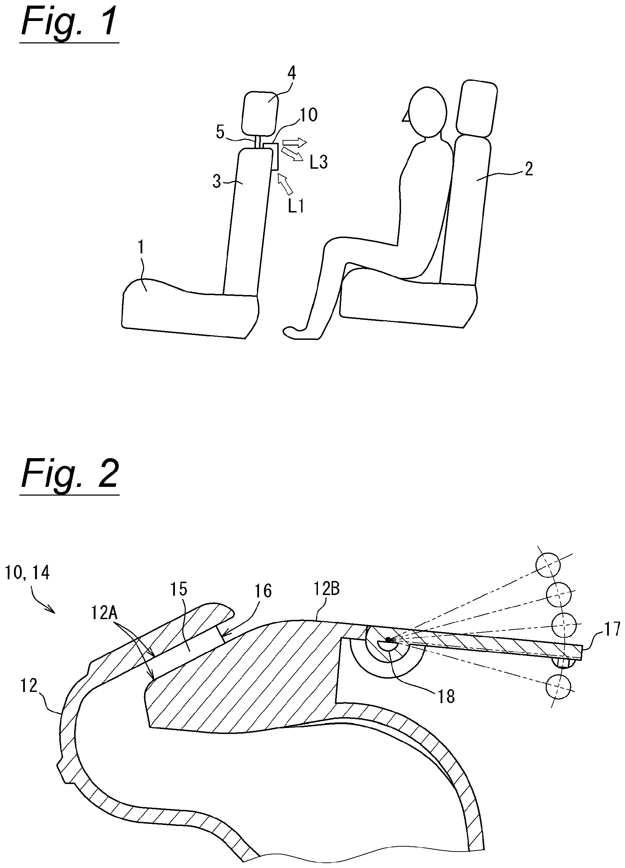

In der Figur 1 sind schematisch zwei hintereinander angeordnete Fahrzeugsitze 1, 2 dargestellt. Der Fahrzeugsitz 1 ist beispielsweise der Fahrer- oder Beifahrersitz, oder allgemein ein Vordersitz, und der Fahrzeugsitz 2 ist ein dahintergelegener Rücksitz. Es kann sich alternativ aber auch um zwei hintereinander angeordnete Sitze eines Fahrzeugs mit mehreren Sitzreihen handeln. Der Vordersitz 1 ist mit einer erfindungsgemäßen Belüftungseinrichtung 10 ausgestattet.

Die Belüftungseinrichtung 10 gemäß dem ersten und zweiten Ausführungsbeispiel ist so ausgerichtet, dass sie Luft im seitlichen und/oder unteren Bereich hinter dem Vordersitz 1 ansaugen kann (Luftströmungsrichtung L1). Die so eingesaugte Luft wird dann weiter einer Luftauslassvorrichtung 14 zugeführt, welche im ersten und zweiten Ausführungsbeispiel am oberen Rand bzw. hinter der Rückenlehne 3 und ggf. unterhalb der Kopfstütze 4 und hinter dem Kopfstützenhalter 5 angeordnet ist. Sie erzeugt eine heckwärtige Luftströmungsrichtung L3, wie dies im Folgenden mit Bezug zu der Figur 2 näher erläutert wird.

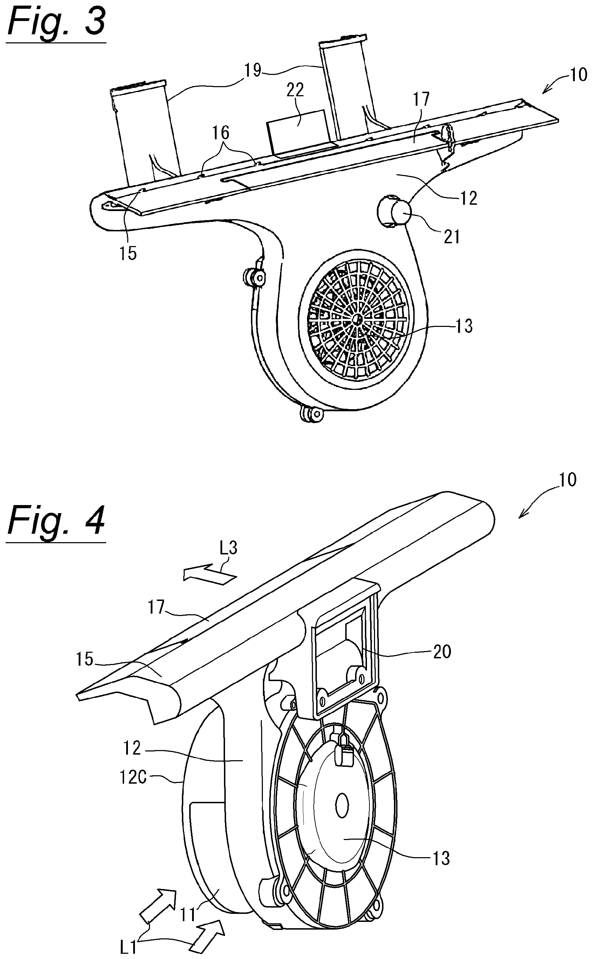

In der Figur 2 ist eine Schnittansicht der Luftauslassvorrichtung 14 dargestellt. Diese ist in Einbaulage im oberen Endbereich der Belüftungseinrichtung 10 angeordnet. Auf den Aufbau der gesamten Belüftungseinrichtung 10 inklusive dem unteren Bereich wird mit Bezug zu den Figuren 3 und 4 noch näher eingegangen.

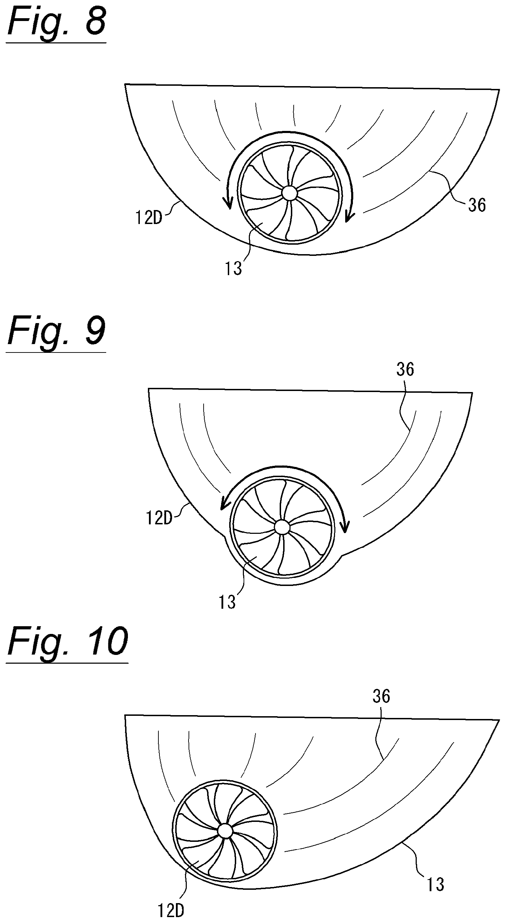

Die vom Gebläse 13 (siehe Figuren 3 und 4) angesaugte Luft wird mittels einer Luftleitstruktur 36 (siehe insbesondere Figur 8 bis 10) über die gesamte Breite der Luftauslassvorrichtung 14 homogen verteilt und in Richtung Schlitzauslass 15 weitergeleitet. Der Schlitzauslass 15 erstreckt sich als schlitzartiger Kanal entlang den Wandabschnitten 12A über eine Länge von einigen mm bis einigen cm stromaufwärts bis in das Gehäuse 12 der Luftauslassvorrichtung 14. Der schlitzartige Kanal legt mit dieser Geometrie die Luftaustrittsrichtung aus dem Schlitzauslass 15 fest.

Stromabwärts des Schlitzauslasses 15 ist an der Oberseite der Luftauslassvorrichtung 14 eine Luftleitfläche 12B ausgebildet. Diese verläuft zunächst parallel zum Schlitzauslass 15 und knickt in Bezug zur Einbaulage weiter stromabwärts gegenüber diesem leicht nach unten ab. Weiter stromabwärts ist eine Luftklappe 17 angeordnet, welche an einer zum Schlitzauslass 15 parallelen Schwenkachse schwenkbar gelagert ist. Die Luftleitfläche 12B und die Luftklappe 17 erlauben ein Überströmen der Luftauslassvorrichtung 14 stromabwärts des Schlitzauslasses 15. Der scharfe, aber sehr dünne Primärluftzug aus dem Schlitzauslass 15 erzeugt einen Mitnahmeeffekt des unmittelbar darüberliegenden Luftvolumens. Dieses kann zwischen dem Bereich der Rückenlehne 3 und der Kopfstütze 4 mitgenommen und leicht beschleunigt werden. Der so erzeugte seichtere Sekundärluftzug stellt eine als angenehm empfundene Belüftung für die Fahrgäste der dahinterliegenden Sitze oder Sitzreihe dar.

Im ersten Ausführungsbeispiel erstreckt sich der schlitzartige Kanal etwa 1 cm in das Gehäuse 12, bevor er sich weiter stromaufwärts aufweitet und umgelenkt wird. Der Schlitzauslass 15 ist entlang seiner seitlichen Erstreckung durch sieben Stege 16 unterbrochen, sodass mehrere Einzelschlitze einer Breite von wenigen cm und einer Dicke von ca. 1 - 2 mm, in einer bevorzugten Ausführungsvariante 1,5 mm, gebildet werden. Wenige Millimeter stromabwärts des Schlitzauslasses 15 fängt die Oberseite des Gehäuses 12 kontinuierlich, d.h. ohne scharfe Kante, an, um eine Winkel von etwa 30° nach unten abzuknicken.

Die Luftklappe 17 lässt sich von Hand über ein Gelenk 18 und verschiedenen Rastpositionen gegenüber der Luftleitfläche 12B nach unten und nach oben verstellen. Im Ausführungsbeispiel sind in je 10°-Abständen Verstellpositionen von -10% bis + 30° vorgesehen. Die Belüftungseinrichtung 10 wird am Vordersitz 1 dann so angebracht, dass die Luftleitfläche 12B um einen Winkel zwischen 10° und 20° nach unten geneigt ist.

In den Figuren 3 und 4 sind jeweils Gesamtansichten der Belüftungseinrichtung 10 gemäß dem ersten Ausführungsbeispiel dargestellt. Das luftführende Gehäuse 12 umfasst im unteren Endabschnitt eine Lufteinlassöffnung 11, im oberen Endabschnitt die zuvor beschriebene Luftauslassvorrichtung 14 sowie ein Gebläse 13, welches in dem Gehäuse 12 angeordnet ist, um Luft von der Lufteinlassöffnung 11 zu der Luftauslassvorrichtung 14 zu transportieren.

Die Luftauslassvorrichtung 14 ist im gezeigten Ausführungsbeispiel ca. 30 cm breit und etwa 5 cm tief. Der Schlitzauslass 15 erstreckt sich im Wesentlichen über die gesamte Breite, während die Luftklappe 17 mittig angeordnet ist, sich nur etwa über die halbe Breite erstreckt und etwa 2 cm tief ist. In anderen Ausführungsvarianten kann die Breite der Luftklappe 17 auch breiter oder schmaler sein. Es können auch mehrere, ggf. unabhängig voneinander einstellbare Klappen 17 vorgesehen sein.

Optional kann an der Oberkante der Luftauslassvorrichtung 14 eine Geräteaufnahme 22 vorgesehen sein, insbesondere zum Halten eines elektronischen Gerätes wie z.B. eines Tablett-PC, eines mobilen Fernsehers oder DVD-Spielers oder eines Mobiltelefons. Die Geräteaufnahme 22 ist dabei in Einbaurichtung vor dem Schlitzauslass 15 angeordnet, sodass wenigstens der Primärluftstrom aus dem Schlitzauslass 15 nicht davon beeinträchtigt wird.

Gemäß Figur 3 erfolgt die Befestigung der Belüftungseinrichtung 10 beispielweise über zwei Befestigungsmittel 19 in Form von halboffenen Aufnahmeschächten, deren Öffnungen zueinander etwa um 90° versetzt sind. Die Montage erfolgt dann, indem zunächst der seitlich geöffnete (hier linke) Aufnahmeschacht um den ersten Kopfstützenhalter 5 gezogen wird und anschließend der nach vorne geöffnete (hier rechte) Aufnahmeschacht durch leichtes Drehen der Belüftungseinrichtung 10 um die durch den ersten Kopfstützenhalter 5 gebildete Drehachse nach vorne mit dem zweiten Kopfstützenhalter 5 verrastet.

Alternativ können andere Befestigungsmöglichkeiten vorgesehen sein, wie dies beispielsweise in der Befestigungsvariante in der Figur 4 dargestellt ist. In diesem Fall ist an der in Einbaulage nach vorne zu richtenden Gehäuseseite oberhalb des Gebläses 13 ein Befestigungsadapter 20 vorgesehen, mittels welchem die Belüftungseinrichtung 10 an der Rückenlehne 3 des Vordersitzes 1 so angeordnet und befestigt werden kann, dass die Oberkante der Luftauslassvorrichtung 14 mit der Oberkante der Rückenlehne 3 in etwa zur Deckung kommt.

Über das unterhalb der Luftauslassvorrichtung 14 angeordnete Gebläse 13, hier einem Radialgebläse, wird die Luft in Bezug auf die Einbaurichtung von hinten angesaugt. Das Gebläse 13 ist in Ansaugrichtung von Gehäuseteil 12C in Form eines flachen Zylinders umgeben, welches einen Hohlraum um die Saugseite des Gebläses 13 bildet. Die Stirnseite sowie die obere Zylindermantelfläche des Gehäuseteils 12C sind geschlossen, sodass der Lufteinlass 11 in der unteren Hälfte, d.h. nach unten bis seitlich, ausgerichtet ist. Im unteren Bereich des Lufteinlasses 11 ist ein Steg zum Stabilisieren des Lufteinlasses 11 vorgesehen, welcher die Zylinderstirnseite senkrecht zum Hauptteil des Gehäuses 12 verbindet und relativ hierzu formstabil hält. Das Gehäuseteil 12C hat im gezeigten Ausführungsbeispiel einen Durchmesser von ca. 9 cm und eine Höhe von ca. 2 cm. Die Querschnittsfläche der Lufteinlassöffnung 11 über die zylindermantelförmige Auslassung im Gehäuseteil 12C beträgt ca. 30 cm². Dies entspricht in etwa auch der Ansaugfläche an der Saugseite des Gebläses 13. Im Vergleich dazu beträgt die Querschnittsfläche des Schlitzauslasses nur ca. 5 cm².

Alternativ kann das Gebläse 13 auch so vorgesehen sein, dass die Luft über den Hohlraum in dem Gehäuseteil 12C von vorne angesaugt wird. Der Lufteinlass 11 ist dann unverändert in der unteren Zylindermantelfläche des Gehäuseteils 12C, welches dann entsprechend in Einbaulage vorderseitig ausgerichtet ist.

Für den nachträglichen Einbau der Belüftungsanlage 10 in ein Kraftfahrzeug kann die Stromversorgung des Gebläses 13 über ein elektrisches Kabel mit einem Adapter für das 12V-Netz bzw. den Zigarettenanzünder des Kraftfahrzeugs ausgestattet sein (nicht dargestellt). Alternativ sind andere Stromversorgungen denkbar. Insbesondere kann die Stromversorgung auch über das Bordnetz im Kraftfahrzeug und/oder den Vordersitz integriert sein. Zum Einstellen der Gebläsestärke ist ein Gebläse-Regler 21 z.B. als Drehknopf an der nach hinten gerichteten Gehäuseseite oberhalb des Gebläses 13 vorgesehen. Durch Drehen des Drehknopfes wird in einer einfachen Ausführungsform ein Widerstand im elektrischen Schaltkreis verändert, sodass damit die Gebläsestufe des Gebläses 13 veränderbar ist.

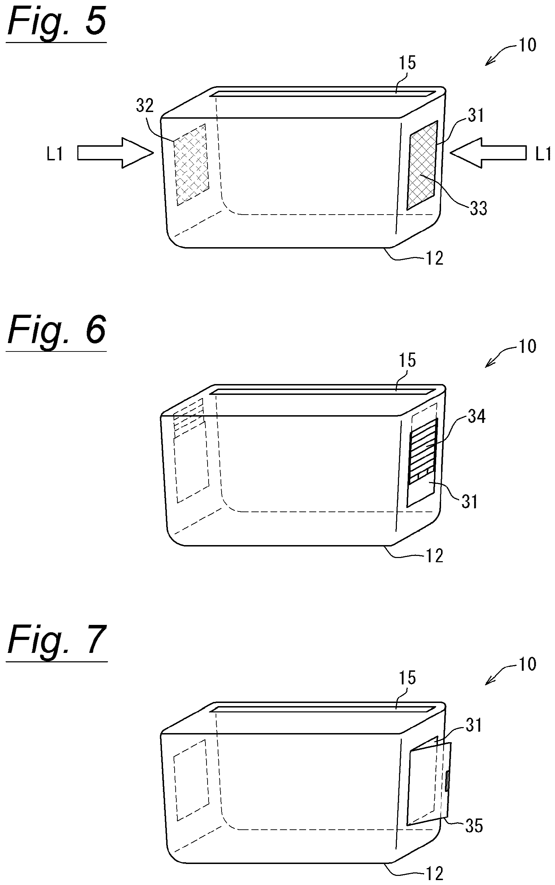

Die Figuren 5 bis 10 zeigen eine Belüftungseinrichtung 10 gemäß einem zweiten Ausführungsbeispiel der Erfindung. In den Figuren 5 bis 7 werden alternative Konzepte zur Luftzufuhr beschrieben. In den Figuren 8 bis 10 werden alternative Konzepte zur Anordnung des Gebläses 13 sowie ggf. Anpassungen an das Gehäuse 12 beschrieben. Diese Ausführungsvarianten lassen sich entsprechend auch auf das erste Ausführungsbeispiel anwenden bzw. mit diesem kombinieren.

Die Figur 5 zeigt dabei die Belüftungseinrichtung 10 mit den Lufteinlassöffnungen 31 und 32 und dem Schlitzauslass 15. Die Lufteinlassöffnungen 31 und 32 sind jeweils an gegenüberliegenden Seiten an den Schmalstellen der Belüftungseinrichtung 10 angebracht und saugen die Luftströme L1 von links und von rechts an. Die Querschnittsfläche der Lufteinlassöffnungen 31 und 32 sind größer als die Querschnittsfläche der schlitzartigen Luftauslassöffnung 15. Bevorzugt sind die Querschnittsflächen der Lufteinlassöffnungen 31 und 32 ungleich groß. Insbesondere ist die Lufteinlassöffnung, welche zum Mittelgang des Fahrzeugs weist, größer als die Lufteinlassöffnung, welche zur Außenseite des Fahrzeugs weist. Ist die Belüftungseinrichtung 10 universell auf beiden Seiten des Fahrzeugs einbaubar, können die Querschnitte der Lufteinlassöffnungen 31 und 32 gleich groß sein. Die Lufteinlassöffnungen 31 und 32 sind mit einer Schutzabdeckung 33, insbesondere einem Schutzgitter ausgestattet. Diese Schutzabdeckung 33 kann dabei aus demselben Material bestehen wie die Belüftungseinrichtung 10 selbst. Als Ausführungsvariante kann die Schutzabdeckung 33 aus Kunststoff bestehen. Sie ist beispielsweise zur Wartung der Belüftungseinrichtung 10 als austauschbares Element eingebaut. Alternativ kann die Schutzabdeckung 33 in der Belüftungseinrichtung 10 fest integriert sein und eine Wartung anderweitig durchgeführt werden.

Die Figuren 6 und 7 zeigen gegenüber der Figur 5 geringfügige Abwandlungen Die Einlassöffnungen 31 und 32 sind jeweils mit einem mechanischen Verstell-Element ausgestattet. Das mechanische Verstell-Element kann insbesondere ein verschiebliches Element im Lufteinlass sein, wie z.B. eine Schiebetür oder Lamellentür 34 (siehe Figur 6) oder eine aufklappbare Tür 35 (siehe Figur 7). Weiterhin sind für das mechanische Verstell-Element dem Fachmann gebräuchliche Mittel vorsehbar, wie Regelklappen oder Stellglieder. Mittels der genannten mechanischen Verstell-Elemente lässt sich die Luftzufuhr L1 regulieren. Dies kann unabhängig voneinander schrittweise oder kontinuierlich über Bedienelemente an der Belüftungseinrichtung 10 geschehen. Insbesondere lässt sich z.B. das Luftzufuhrverhältnis zwischen links und rechts einstellen oder korrigieren.

Die Figuren 8 bis 10 zeigen das Innere der Belüftungseinrichtung 10 mit dem Gehäuseteil 12D, dem Gebläse 13 und der Luftführungsstruktur 17. Das Gehäuseteil 12D kann insbesondere ein inneres Gehäuseteil im Gehäuse 12 sein, welches seitlich geschlossen ist und insbesondere ein Ansaugen von Luft durch das Gebläse von vorne oder hinten erlaubt. Das Gebläse 13, vorzugsweise ein Radialgebläse, Scirocco oder Turbogebläse, bestehend aus einer nicht dargestellten Antriebseinheit und einem Flügelrad oder einem Ventilator, ist in das Gehäuseteil 12D in der Belüftungseinrichtung 10 eingebracht. Der von den Lufteinlassöffnungen 31, 32 kommende Luftstrom L1 wird mittels des Gebläses 13 angesaugt, beschleunigt und zur Luftauslassöffnung 15 befördert. Das Gehäuseteil 12D ist dabei U-förmig ausgebildet und hat eine 180° Öffnung zum Auslassen des Luftstroms in Richtung der Luftführungsstruktur 17. Die Luftführungsstruktur 17 stromabwärts des Gebläses 13 in dem Gehäuseteil 12D ist derart ausgebildet, dass es den Luftstrom zum Luftauslass lenken und/ oder leiten kann. Die Luftführungsstruktur 17 kann durch Leitbleche, Rippen, Flügel, Grate und/ oder sonstige dem Fachmann bekannte Leitmittel gebildet werden. Der vom Gebläse 13 kommende Luftstrom wird so parallelisiert und homogen in Richtung Luftaustrittsöffnung 15 verteilt. Die Luft wird in Luftströmungsrichtung L3 im Wesentlichen heckwärts als feiner, scharfer Luftzug, dem Primärluftzug, ausgeblasen.

Die Figur 9 zeigt eine Ausführungsvariante des Gebläses 13 in dem Gehäuseteil 12D, bei dem das Gebläse 13 bevorzugt mittig in einer Vertiefung oder einer Senke im Gehäuseteil 12D angeordnet ist. Über die Luftführungsstruktur 17 wird ein Luftstrom in Richtung des Schlitzauslasses 15 weitergeleitet.

Figur 10 zeigt eine weitere Anordnung des Gebläses 13, wobei dieses asymmetrisch im Gehäuseteil 12D angeordnet ist, d.h. eine horizontal und/ oder vertikal verschobene Position bezüglich der symmetrischen Mitte des Gehäuseteils 12D hat.

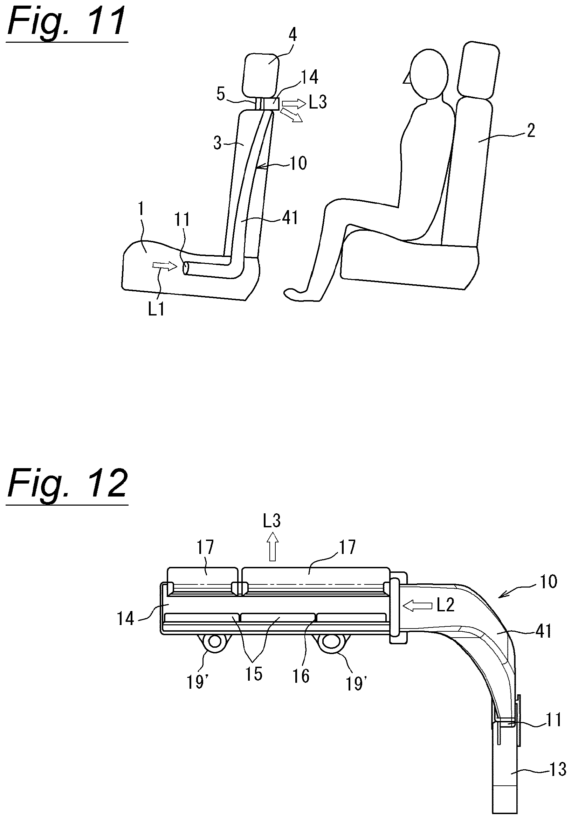

Die Figuren 11 bis 14 zeigen eine Belüftungseinrichtung 10 gemäß einem dritten Ausführungsbeispiel der Erfindung. Einzelne Merkmale dieses Ausführungsbeispiels lassen sich entsprechend auch mit den vorangegangenen Ausführungsbeispielen kombinieren. In der Figur 11 sind analog zu der Figur 1 schematisch zwei hintereinander angeordnete Fahrzeugsitze 1, 2 dargestellt. Der wesentliche Unterschied besteht in der unterschiedlichen Luftzuführung, wie dies im Folgenden im Detail weiter erläutert wird.

Die Belüftungseinrichtung 10 gemäß diesem Ausführungsbeispiel ist so ausgerichtet, dass sie über eine Lufteinlassöffnung 11 Luft im seitlichen Bereich des Vordersitzes 1 von vorne ansaugen kann (Luftströmungsrichtung L1). Über einen Lufteingangskanal 41 wird die Luft dann weiter einer Luftauslassvorrichtung 14 zugeführt. Die Luftauslassvorrichtung 14 ist im gezeigten Ausführungsbeispiel am oberen Rand der Rückenlehne 3, unterhalb der Kopfstütze 4 und hinter dem Kopfstützenhalter 5 angeordnet, und erzeugt eine heckwärtige Luftströmungsrichtung L3, wie dies im Detail mit Bezug zu den Figuren 12-14 noch näher erläutert wird.

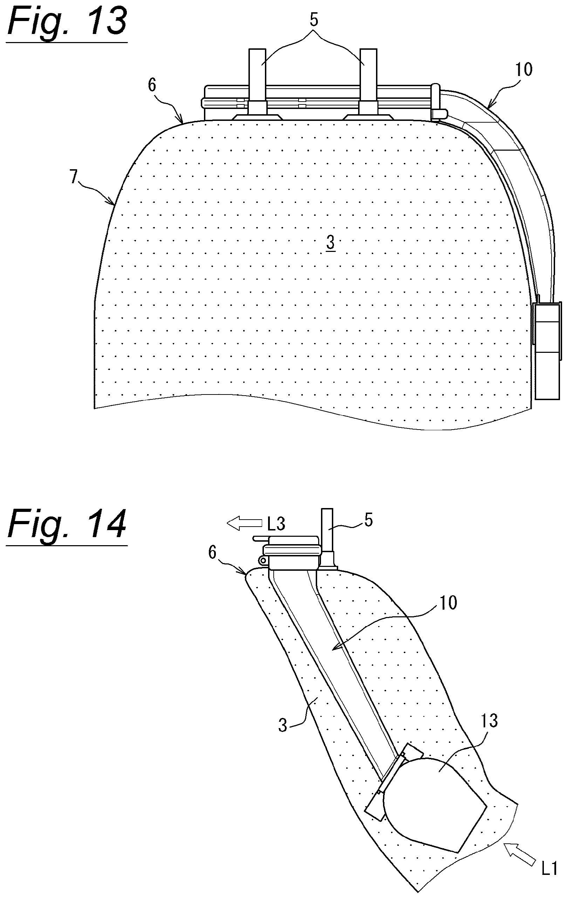

Die Figur 12 zeigt dabei die Belüftungseinrichtung 10 in Bezug zur vorgesehenen Einbaurichtung als Draufsicht ohne den Vordersitz. Die Figuren 13 und 14 zeigen die an einer Rückenlehne 3 befestigte Belüftungseinrichtung 10 in einer Rückansicht und einer Seitenansicht in der Horizontalebene.

Die Belüftungseinrichtung 10 weist einen Lufteingangskanal 41 mit einer Lufteinlassöffnung 11 auf, welche etwa 2 - 3 cm breit und 4 cm tief ist (in Bezug zur Einbaulage). Im Bereich der Lufteinlassöffnung 11 sind Befestigungselemente zum seitlichen Befestigen am Vordersitz 1 sowie ein Gebläse 13 angeordnet, welches Luft von vorne ansaugt und durch den Lufteingangskanal 41 zu der Luftauslassvorrichtung 14 transportiert.

Die Lufteinlassöffnung 11 kann auch seitlich ausgerichtet. Die Luft wird in diesem Fall durch ein als Radialgebläse ausgestaltetes Gebläse 13 seitlich eingesaugt (analog dem mit Bezug zu der Figur 3 gezeigten Radialgebläse, welches diesem gegenüber aber 90° gedreht angeordnet ist), und dann nach oben in den Lufteingangskanal 41 umgelenkt. Die Querschnittsfläche der Lufteinlassöffnung 11, in diesem Fall gleich der Ansaugfläche an der Saugseite des Gebläses 13 beträgt ca. 20 - 30 cm². Die Ansaugfläche an der Saugseite des Gebläses 13 kann wiederum von einem zylinderförmigen Gehäuseteil 12C umgeben sein, wie dieses mit Bezug zu der Figur 4 bereits beschrieben wurde. Die Lufteintrittsöffnung 11 an der Zylindermantelfläche kann dann nach vorne ausgerichtet werden.

Der Lufteingangskanal 41 ist bogenförmig gekrümmt und weist eine Gesamtlänge von etwa 30 - 40 cm auf. Die Luftströmungsrichtung L1, welche im Bereich der Lufteinlassöffnung 11 vorherrscht, wird somit nach oben und zunehmend seitlich umgelenkt, sodass die Luftströmungsrichtung L2 am Übergang vom Lufteingangskanal 41 in die Luftauslassvorrichtung 14 annähernd senkrecht dazu verläuft. Der bogenförmige Verlauf des Lufteingangskanals 41 ist dabei an die Kontur des seitlichen Rands 7 der Rückenlehne 3 angepasst.

Die Luftauslassvorrichtung 14 ist zur Befestigung an der Rückenlehne 3 des Fahrzeugsitzes 1 angepasst. Sie weist dazu Befestigungsösen 19' auf, mittels welcher die Luftauslassvorrichtung 14 an der Rückenlehne 3 befestigbar ist. Die Befestigungsösen 19' können beispielsweise direkt mit den Kopfstützenhaltern 5 in Eingriff gebracht werden. Dazu wird beispielsweise die Kopfstütze 4 entfernt und die Befestigungsösen 19' über die Kopfstützenhalter 5 aufgeschoben, sodass letztere von den Befestigungsösen 19' fest umgeben werden. Die Kopfstütze 5 kann dann wieder aufgesetzt werden. Alternativ sind auch andere Befestigungskonzepte denkbar, beispielsweise über eine Rast- oder Steckverbindung.

Die Luftauslassvorrichtung 14 ist im gezeigten Ausführungsbeispiel langgestreckt ausgebildet, sodass sie einen erheblichen Teil der Sitzbreite abdeckt. Sie ist im gezeigten Ausführungsbeispiel etwa 25 - 30 cm breit, weist dabei aber nur eine Höhe von etwa 4 cm und eine Tiefe von etwa 6 cm auf. Sie empfängt die zugeführte Luft des Luftstroms L2 über die seitliche Schmalseite. In Längsrichtung der Luftauslassvorrichtung 14 verläuft ein langgestreckter Schlitzauslass 15, welcher horizontal zum oberen Rand 6 der Rückenlehne 3 ausgerichtet ist. Der Schlitzauslass 15 verlängert sich schräg nach vorne in das Gehäuse der Luftauslassvorrichtung 14, sodass die dort austretende Luft im Wesentlichen nach hinten ausgeblasen wird. Der Schlitzauslass 15 ist durch Stege 16 kurz durchbrochen, sodass drei in etwa 10 cm lange Einzelschlitze einer Dicke von nur 1 - 2 mm gebildet werden.

Gemäß einer Ausführungsvariante wird die Luftströmungsrichtung in der Luftauslassvorrichtung 14 mehrfach umgelenkt. Nach dem Einströmen in Höhe der Luftströmungsrichtung L2 passiert die Luft eine Luftführungsstruktur (nicht dargestellt) zur Homogenisierung der Luftströmung über die gesamte Schlitzlänge und wird schließlich wenigstens einmal senkrecht umgelenkt, sodass sie im Wesentlichen heckwärts in Luftströmungsrichtung L3 als feiner, scharfer Luftzug, dem Primärluftzug, ausgeblasen wird.

An der Luftauslassvorrichtung 14 sind mehrere Luftklappen 17 vorgesehen. Diese sind an einer zum Schlitzauslass 15 parallelen Schwenkachse derart gelagert, dass sie etwa 3 - 4 cm stromabwärts des Schlitzauslasses 15 liegen. Die Luftklappen 17 sind von Hand einzeln verstellbar. Sie können insbesondere leicht nach oben geklappt werden, sodass der Primärluftzug nicht direkt auf den dahinter sitzenden Fahrgast trifft. Der scharfe, aber sehr dünne Primärluftzug erzeugt einen Mitnahmeeffekt des unmittelbar darüberliegenden Luftvolumens. Dieses kann leicht zwischen dem Bereich des oberen Randes 6 der Rückenlehne 3 und der Kopfstütze 4 mitgenommen und leicht beschleunigt werden. Der so erzeugte seichtere Sekundärluftzug stellt eine als angenehm empfundene Belüftung für die Fahrgäste der dahinterliegenden Sitze oder Sitzreihe dar.

An der Belüftungseinrichtung 10, beispielsweise an dem Gehäuse der Luftauslassvorrichtung 14, ist optional ein Bedienelement zum Einstellen der Gebläsestufe angeordnet (nicht dargestellt). Das Gebläse wird typischerweise von einer geeigneten Position aus an das elektrische Bordnetz des Kraftfahrzeugs angeschlossen. Alternativ oder auch zusätzlich kann das Gebläse 13 auch von typischerweise vom Fahrer zu bedienenden Hauptbedienkonsole des Kraftfahrzeugs bedienbar sein (nicht dargestellt).

In einem weiteren Ausführungsbeispiel ist die Luftauslassvorrichtung 14' plattenförmig ausgebildet (nicht dargestellt). Während langgestreckte Schlitzauslässe 15' wahlwiese an den seitlichen Rändern 7 und/oder den oberen Rand 6 der Rückenlehne 3 angeordnet sein können, erfolgt die Luftzufuhr gemäß der Luftströmungsrichtung L2 von unten oder - falls nicht beide seitlichen Ränder 7 für den Schlitzauslass 15' verwendet werden - ggf. seitlich.

### BEZUGSZEICHENLISTE

- 1: Vordersitz
- 2: Rücksitz
- 3: Rückenlehne
- 4: Kopfstütze
- 5: Kopfstützenhalter
- 6: oberer Rand
- 7: seitlicher Rand
- 10: Belüftungseinrichtung
- 11: Lufteinlassöffnungen
- 12,: Gehäuse,
- 12A - 12D: Gehäusebereiche
- 13: Gebläse
- 14: Luftauslassvorrichtung
- 15: Schlitzauslass
- 16: Steg
- 17: Luftklappen
- 18: Gelenk
- 19, 20: Befestigungsmittel
- 21: Gebläse-Regler
- 22: Geräteaufnahme
- 31, 32: Lufteinlassöffnungen
- 33: Schutzabdeckung
- 34, 35: mechanische Verstell-Elemente
- 36: Luftleitstruktur
- 41: Lufteingangskanal
- L1-L3: Luftströmungen

## Patentansprüche

1. Belüftungseinrichtung (10), insbesondere zur Verwendung in einem Kraftfahrzeug, umfassend ein luftführendes Gehäuse (12) mit
- wenigstens einer Lufteinlassöffnung (11, 31, 32),
- einer mit der Lufteinlassöffnung (11, 31, 32) verbundenen Luftauslassvorrichtung (14) und
- einem Gebläse (13), welches anordenbar ist, um Luft von der Lufteinlassöffnung (11, 31, 32) zu der Luftauslassvorrichtung (14) zu transportieren, wobei
- die Belüftungseinrichtung (10) zur Befestigung an oder zur Integration in einem Sitz, insbesondere an einem Fahrzeugsitz (1), geeignet ist, wobei die Luftauslassvorrichtung (14) zur Befestigung an oder zur Integration in der Rückenlehne (3) des Sitzes geeignet ist, und wobei
- die Luftauslassvorrichtung (14) eine langgestreckte schlitzartige Luftaustrittsöffnung (15) aufweist, **dadurch gekennzeichnet, dass** die Luftaustrittsöffnung (15) zur Ausrichtung zum Begrenzungsrand (6, 7) und/oder zur Anordnung oberhalb vom oberen Begrenzungsrand (6) der Rückenlehne (3) zum rückwärtigen Ausblasen von Luft geeignet ist, und
- die schlitzartige Luftaustrittsöffnung (15) derart in der Luftauslassvorrichtung (14) vorgesehen ist, dass ein Überströmen der Luftauslassvorrichtung (14) stromabwärts der Luftaustrittsöffnung (15) ermöglicht wird.

2. Belüftungseinrichtung (10) nach Anspruch 1,
**dadurch gekennzeichnet, dass** die wenigstens eine Lufteinlassöffnung (11, 31, 32) in Einbaurichtung seitlich und/oder nach unten ausgerichtet sind.

3. Belüftungseinrichtung (10) nach einem der Ansprüche 1 oder 2,
**dadurch gekennzeichnet, dass** die Luftauslassvorrichtung (14) langgestreckt ausgebildet ist, wobei die langgestreckte schlitzartige Luftaustrittsöffnung (15) entlang der so gebildeten Längsrichtung der Luftauslassvorrichtung (14) verläuft.

4. Belüftungseinrichtung (10) nach einem der Ansprüche 1 bis 3,
**dadurch gekennzeichnet, dass** das luftführende Gehäuse (12) einen Lufteingangskanal (41) mit der wenigstens einen Lufteinlassöffnung (11) umfasst, wobei das Gebläse (13) in dem Lufteingangskanal (41) anordenbar ist, um Luft von der Lufteinlassöffnung (11) zu der Luftauslassvorrichtung (14) zu transportieren.

5. Belüftungseinrichtung (10) nach Anspruch 4,
**dadurch gekennzeichnet, dass**
- der Lufteingangskanal (41) bogenförmig gekrümmt ist, wobei die Luftströmungsrichtung (L1) an der Lufteinlassöffnung (11) im Wesentlichen senkrecht zu der Luftströmungsrichtung (L2) am Übergang vom Lufteingangskanal (41) in die Luftauslassvorrichtung (14) verläuft, und
- die Luftauslassvorrichtung (14) derart gestaltet ist, dass die Luftströmungsrichtung (L3) in der Luftauslassvorrichtung (14) bis zum Austritt aus der Luftaustrittsöffnung (15) wenigstens einmal senkrecht umgelenkt wird.

6. Belüftungseinrichtung (10) nach Anspruch 4,
**dadurch gekennzeichnet, dass**
- die Luftauslassvorrichtung (14) plattenförmig ist, wobei die langgestreckte schlitzartige Luftaustrittsöffnung (15) an wenigstens einem Randbereich der Luftauslassvorrichtung (14) verläuft, und
- die Luftzufuhr (L2) über den unteren oder einen seitlichen Rand erfolgt.

7. Belüftungseinrichtung (10) nach einem der Ansprüche 1 bis 3,
**dadurch gekennzeichnet, dass** das Gebläse (13)
- die Luft in Einbaurichtung von hinten oder von vorne ansaugt und
- in Einbaurichtung unterhalb von der Luftauslassvorrichtung (14) angeordnet ist.

8. Belüftungseinrichtung (10) nach Anspruch 7,
**dadurch gekennzeichnet, dass** das Gebläse (13) ein Radialgebläse ist, welcher in Ansaugrichtung von einem Hohlraum umgeben ist, wobei der Hohlraum in Einbaurichtung nach oben geschlossen und nach unten und/oder seitlich wenigstens teilweise geöffnet ist.

9. Belüftungseinrichtung (10) nach einem der vorangegangenen Ansprüche,
**dadurch gekennzeichnet, dass** die Schlitzdicke der schlitzartige Luftaustrittsöffnung (15) zwischen 0,5 mm bis 5 mm, vorzugsweise zwischen 1 mm und 2 mm beträgt.

10. Belüftungseinrichtung (10) nach einem der vorangegangenen Ansprüche,
**dadurch gekennzeichnet, dass**
- der schlitzförmige Querschnitt der Luftaustrittsöffnung (15) sich mittels in die Luftauslassvorrichtung (14) hineinverlaufende Wandungen (12A) stromaufwärts als schlitzartiger Kanal erstreckt, und
- stromabwärts der Luftaustrittsöffnung (15) eine Luftleitfläche (12B) an der Luftauslassvorrichtung (14) ausgebildet ist.

11. Belüftungseinrichtung (10) nach Anspruch 10,
**dadurch gekennzeichnet, dass** in Einbaurichtung die Luftleitfläche (12B) von dem schlitzartigen Kanal (12A) zwischen 10° und 45°, bevorzugt zwischen 15° und 35°, nach unten abgewinkelt ist.

12. Belüftungseinrichtung (10) nach einem der vorangegangenen Ansprüche,
**dadurch gekennzeichnet, dass** an der Luftauslassvorrichtung (14) eine Luftklappenanordnung (17) vorgesehen ist, welche an einer zur langgestreckten schlitzartigen Luftaustrittsöffnung (15) parallelen Schwenkachse (18) stromabwärts der Luftaustrittsöffnung (15) schwenkbar gelagert ist.

13. Sitz, insbesondere Fahrzeugsitz (1), mit einer Belüftungseinrichtung (10) nach einem der vorangegangenen Ansprüche.

14. Fahrzeugsitz (1) nach Anspruch 13,
**dadurch gekennzeichnet, dass** die langgestreckte schlitzartige Luftaustrittsöffnung (15) am oberen oder seitlichen Begrenzungsrand (6, 7) der Rückenlehne (3) des Fahrzeugsitzes (1) angeordnet und/oder zu dieser ausgerichtet ist.

15. Fahrzeugsitz (1) nach einem der Ansprüche 13 oder 14,
**dadurch gekennzeichnet, dass** die Lufteinlassöffnung (11)
- im seitlichen Bereich (7) des Fahrzeugsitzes (1), insbesondere im Bereich einer Armlehne, angeordnet ist, und
- der Öffnungsquerschnitt in Bezug zur Einbaurichtung im Kraftfahrzeug im Wesentlichen seitlich oder nach vorne ausgerichtet ist.

16. Fahrzeug mit einem Fahrzeugsitz (1) nach einem der Ansprüche 13 bis 15.

## Claims

1. Ventilation device (10), particularly for use in a motor vehicle, comprising an air-guiding housing (12) having
- at least one air inlet opening (11, 31, 32),
- an air outlet device (14) communicating with the air inlet opening (11, 31, 32) and
- a blower (13), arrangeable such as to transport air from the air inlet opening (11, 31, 32) to the air outlet device (14),
wherein
- the ventilation device (10) is adapted to be mounted at or to be integrated in a seat, particularly a vehicle seat (1), wherein the air outlet device (14) is adapted to be mounted at or to be integrated in the backrest (3) of the seat, and
- the air outlet device (14) comprises an elongated slit-shaped air outlet opening (15), **characterized in that**
- the air outlet opening (15) is adapted to be aligned to the margin (6, 7) of the backrest (3) and/or to be arranged above the upper margin (6) of the backrest (3) for blowing out air backwardly, and
- the slit-shaped air outlet opening (15) is provided within the air outlet device (14) such as to facilitate an overflowing of the air outlet device (14) downstream of the air outlet opening (15).

2. Ventilation device (10) according to claim 1,
**characterized in that** the at least one air inlet opening (11, 31, 32) is arranged sidewardly and/or downwardly in mounting direction.

3. Ventilation device (10) according to claim 1 or 2,
**characterized in that** the air outlet device (14) has an elongated shape, wherein the elongated, slit-shaped air outlet opening (15) is running alongside the thus created longitudinal direction of the air outlet device (14).

4. Ventilation device (10) according to any of claims 1 to 3,
**characterized in that** the air-guiding housing (12) has an air inlet duct (41) comprising the at least one air inlet opening (11), wherein the blower (13) is arrangeable within the air inlet duct (41) such as to transport air from the air inlet opening (11) to the air outlet device (14).

5. Ventilation device (10) according to claim 4,
**characterized in that**
- the air inlet duct (41) is bent arc-shaped, wherein the air flow direction (L1) at the air inlet opening (11) is running essentially perpendicular to the air flow direction (L2) at the transition of the air inlet duct (41) into the air outlet device (14), and
- the air outlet device (14) is arranged such that the air flow direction (L3) within the air outlet device (14) is at least once diverted perpendicularly until the discharge out of the air outlet opening (15).

6. Ventilation device (10) according to claim 4,
**characterized in that**
- the air outlet device (14) is plate-like, wherein the elongated, slit-shaped air outlet opening (15) is running alongside at least one margin of the air outlet device (14), and
- the air supply (L2) takes place via the lower or sideward edge.

7. Ventilation device (10) according to any of claims 1 to 3,
**characterized in that** the blower (13)
- sucks in the air in mounting direction from behind or from ahead and
- is arranged in mounting direction underneath the air outlet device(14).

8. Ventilation device (10) according to claim 7,
**characterized in that** the blower (13) is a radial fan which in suction direction is surrounded by a cavity, wherein in mounting direction the cavity is closed to the upper side and is at least partially open towards the bottom side and/or sidewardly.

9. Ventilation device (10) according to any of the preceding claims,
**characterized in that** the slit thickness of the slit-shaped air outlet opening (15) is between 0.5 mm and 5 mm, preferably between 1 mm and 2 mm.

10. Ventilation device (10) according to any of the preceding claims,
**characterized in that**
- the slit-shaped cross section of the air outlet opening (15) extends upstream as slit-like duct by means of walls (12A) extending into the air outlet device (14), and
- downstream of the air outlet opening (15) an air guide surface (12B) is formed at the air outlet device (14).

11. Ventilation device (10) according to claim 10,
**characterized in that** in mounting direction the air guide surface (12B) is angled downwardly relative to the slit-like duct (12A) with an angle between 10° and 45°, preferably between 15° and 35°.

12. Ventilation device (10) according to any of the preceding claims,
**characterized in that** at the air outlet device (14) an air flap arrangement (17) is provided, which is pivotably mounted at a pivot axis (18) parallel to the elongated slit-shaped air outlet opening (15) downstream of the air outlet opening (15).

13. Seat, particularly a vehicle seat (1), having a ventilation device (10) according to any of the preceding claims.

14. Vehicle seat (1) according to claim 13,
**characterized in that** the elongated slit-shaped air outlet opening (15) is arranged at and/or aligned to the upper or sideward margin (6, 7) of the backrest (3) of the vehicle seat (1).

15. Vehicle seat (1) according to claim 13 or 14,
**characterized in that** the air inlet opening (11)
- is arranged at the side area (7) of the vehicle seat (1), particularly in the area of the arm rest, and
- the opening cross section is arranged essentially sidewardly or towards the front relative to the mounting direction within the motor vehicle.

16. Vehicle with a vehicle seat (1) according to any of claims 13 to 15.

## Revendications

1. Dispositif de ventilation (10), destiné en particulier à être utilisé dans un véhicule automobile, comprenant un carter (12) conducteur d'air, avec
- au moins une ouverture d'admission d'air (11, 31, 32),
- un dispositif de sortie d'air (14) relié à l'ouverture d'admission d'air (11, 31, 32), et
- un ventilateur (13) pouvant être disposé pour refouler de l'air de l'ouverture d'admission d'air (11, 31, 32) vers le dispositif de sortie d'air (14), où
- ledit dispositif de ventilation (10) est prévu pour être fixé sur, ou être intégré à un siège, en particulier un siège de véhicule (1), le dispositif de sortie d'air (14) étant prévu pour être fixé sur, ou être intégré au dossier (3) du siège, et où
- le dispositif de sortie d'air (14) présente une ouverture de sortie d'air (15) en fente étirée en longueur, **caractérisé en ce que**
- l'ouverture de sortie d'air (15) est prévue pour être alignée avec le bord de délimitation (6, 7) et/ou pour être disposée au-dessus du bord de délimitation (6) supérieur du dossier (3) pour un soufflage d'air vers l'arrière, et
- l'ouverture de sortie d'air (15) en fente est prévue dans le dispositif de sortie d'air (14) de manière à permettre une décharge du dispositif de sortie d'air (14) en aval de l'ouverture de sortie d'air (15).

2. Dispositif de ventilation (10) selon la revendication 1,
**caractérisé en ce que** ladite au moins une ouverture d'admission d'air (11, 31, 32) est orientée vers le côté et/ou vers le bas en direction de montage.

3. Dispositif de ventilation (10) selon la revendication 1 ou la revendication 2,
**caractérisé en ce que** le dispositif de sortie d'air (14) est réalisé étendu en longueur, l'ouverture de sortie d'air (15) en fente étirée en longueur s'étendant dans la direction longitudinale ainsi formée du dispositif de sortie d'air (14).

4. Dispositif de ventilation (10) selon l'une des revendications 1 à 3,
**caractérisé en ce que** le carter (12) conducteur d'air comprend un canal d'entrée d'air (41) avec ladite au moins une ouverture d'admission d'air (11), le ventilateur (13) pouvant être disposé dans le canal d'entrée d'air (41) pour refouler de l'air de l'ouverture d'admission d'air (11) vers le dispositif de sortie d'air (14).

5. Dispositif de ventilation (10) selon la revendication 4,
**caractérisé en ce que**
- le canal d'entrée d'air (41) est incurvé en forme d'arc, la direction d'écoulement de l'air (L1) à l'ouverture d'admission d'air (11) s'étendant sensiblement perpendiculairement à la direction d'écoulement de l'air (L2) au passage du canal d'entrée d'air (41) vers le dispositif de sortie d'air (14), et
- le dispositif de sortie d'air (14) est configuré de manière à dévier au moins une fois à angle droit la direction d'écoulement de l'air (L3) dans le dispositif de sortie d'air (14) jusqu'à la sortie hors de l'ouverture de sortie d'air (15).

6. Dispositif de ventilation (10) selon la revendication 4,
**caractérisé en ce que**
- le dispositif de sortie d'air (14) est en forme de plateau, l'ouverture de sortie d'air (15) en fente étirée en longueur s'étendant sur au moins une zone de bord du dispositif de sortie d'air (14), et
- l'amenée d'air (L2) est réalisée par le bord inférieur ou par un bord latéral.

7. Dispositif de ventilation (10) selon l'une des revendications 1 à 3
**caractérisé en ce que** le ventilateur (13)
- aspire l'air par l'arrière ou par l'avant dans la direction de montage, et
- est disposé en dessous du dispositif de sortie d'air (14) dans la direction de montage.

8. Dispositif de ventilation (10) selon la revendication 7,
**caractérisé en ce que** le ventilateur (13) est un ventilateur radial entouré d'une cavité dans la direction d'aspiration, ladite cavité étant fermée vers le haut et au moins partiellement ouverte vers le bas et/ou latéralement dans la direction de montage.

9. Dispositif de ventilation (10) selon l'une des revendications précédentes,
**caractérisé en ce que** l'épaisseur de l'ouverture de sortie d'air (15) en fente est comprise entre 0,5 mm et 5 mm, préférentiellement entre 1 mm et 2 mm.

10. Dispositif de ventilation (10) selon l'une des revendications précédentes,
**caractérisé en ce que**
- la section transversale en fente de l'ouverture de sortie d'air (15) s'étend en amont comme un canal en forme de fente au moyen de parois (12A) pénétrant dans le dispositif de sortie d'air (14), et
- **en ce qu'**une surface de déflexion d'air (12B) est formée sur le dispositif de sortie d'air (14) en aval de l'ouverture de sortie d'air (15).

11. Dispositif de ventilation (10) selon la revendication 10,
**caractérisé en ce que** dans la direction de montage la surface de déflexion d'air (12B) est coudée vers le bas depuis le canal en forme de fente (12A), entre 10° et 45°, préférentiellement entre 15° et 35°.

12. Dispositif de ventilation (10) selon l'une des revendications précédentes,
**caractérisé en ce qu'**un dispositif de clapet d'air (17) est prévu sur le dispositif de sortie d'air (14), lequel est monté de manière pivotante sur un axe de pivotement (18) parallèle à l'ouverture de sortie d'air (15) en fente étirée en longueur en aval de l'ouverture de sortie d'air (15).

13. Siège, en particulier siège de véhicule (1), avec un dispositif de ventilation (10) selon l'une des revendications précédentes.

14. Siège de véhicule (1) selon la revendication 13, **caractérisé en ce que** l'ouverture de sortie d'air (15) en fente étirée en longueur est alignée contre le bord de délimitation (6, 7) supérieur ou latéral du dossier (3) du siège de véhicule (1) et/ou dirigée vers celui-ci.

15. Siège de véhicule (1) selon la revendication 13 ou la revendication 14, **caractérisé en ce que**
- l'ouverture d'admission d'air (11) est disposée dans la partie latérale (7) du siège de véhicule (1), en particulier au niveau d'un accoudoir, et
- **en ce que** la section transversale d'ouverture est dirigée sensiblement vers le côté ou vers l'avant par rapport à la direction de montage dans le véhicule automobile.

16. Véhicule, avec un siège de véhicule (1) selon l'une des revendications 13 à 15.
